# EUROPEAN PATENT SPECIFICATION

(11) **EP 3 427 517 B1**
(45) Date of publication and mention of the grant of the patent: **04.08.2021**
(21) Application number: 16892997.4
(22) Date of filing: 07.03.2016
(51) Int. Cl.: H04W 48/18, H04W 48/14

(54) **METHOD FOR TRAFFIC STEERING, NETWORK DEVICE AND TERMINAL DEVICE**
VERFAHREN ZUR VERKEHRSSTEUERUNG, NETZWERKVORRICHTUNG UND ENDGERÄTEVORRICHTUNG
PROCÉDÉ D'ORIENTATION DE TRAFIC, DISPOSITIF DE RÉSEAU ET DISPOSITIF DE TERMINAL

(43) Date of publication of application: 16.01.2019
(73) Proprietor: Telefonaktiebolaget LM Ericsson (PUBL), 164 83 Stockholm (SE)
(72) Inventor: ZHANG, Shunliang, Beijing 100102 (CN); WU, Yi, Beijing 100102 (CN)
(74) Representative: Zacco Sweden AB
(86) International application number: PCT/CN2016/075786
(87) International publication number: WO 2017/152345

(56) References cited:
- WO-A1-2014/067587
- CN-A- 103 313 306
- CN-A- 104 205 948
- KR-A- 20090 066 115
- KR-A- 20100 079 093
- US-A1- 2014 071 854
- US-A1- 2014 233 386
- US-A1- 2015 092 553
- US-A1- 2015 223 158

## Description

### TECHNICAL FIELD

The present disclosure relates to radio communication, and more particularly, to methods for traffic steering, a network device and a terminal device.

### BACKGROUND

Leading operators and vendors in the Next Generation Mobile Network (NGMN) Alliance are expecting various applications and services to be provided by the fifth generation (5G) network. The 5G network will support a huge amount of applications and services having different performance attributes from delay-sensitive video applications to ultra-low latency real-time applications, from entertainment applications in high-speed vehicles to mobility on demand applications for connected objects, and from best-effort applications to reliable or ultra-reliable applications such as health and security. Furthermore, various people and/or machine related traffics will be delivered to/from a wide range of devices (e.g., smartphones, wearable devices and Machine Type Communication (MTC) devices) across a highly heterogeneous network environment. Different applications or services have quite different requirements on access networks in terms of e.g., acceptable interruption time, reliability and availability, acceptable latency, data rate as well as cost per user. It would be quite difficult or even impossible to transmit various traffics over one single uniform access network while fulfilling such extremely diverse requirements.

In addition, given the explosive growth of data traffic resulted from various 5G scenarios, the existing licensed spectrum is far from enough to provide satisfactory user experience and/or cost efficiency. As stated by the NGMN Alliance in the 5G whitepaper, in addition to the exclusive licensed spectrum, some shared, unlicensed spectrum may also be required. Access technologies utilizing unlicensed spectrum (e.g., Wireless Local Area Network (WLAN)) may continue to play a role in the data traffic management. However, technical limitations in service management, cell coverage and traffic handling make them unlikely substitutes for the 5G network, but may be seamlessly integrated into the overall 5G system.

The 3^{rd} Generation Partner Project (3GPP) has introduced a Long Term Evolution (LTE) - WLAN Aggregation (LWA) technique for interworking between an LTE network and a WLAN. The LWA allows data aggregation whereby a data bearer can be served by an LTE radio link and/or a WLAN radio link. It provides better control and utilization of resources in both links and increases the aggregate throughput and system capacity.

In addition to WLAN access, it has been proposed to extend the LTE access technology to unlicensed spectrum. Two solutions have been provided: Licensed Assisted Access (LAA) and standalone LTE-Unlicensed (LTE-U). The LAA utilizes an unlicensed spectrum as a performance booster managed by a licensed carrier. The traditional carrier aggregation framework used for licensed carriers can be reused in the LAA. For example, a licensed carrier can be used as a Primary Cell (PCell) for control signaling as well as real-time user data, while an unlicensed carrier can be used as a Secondary Cell (SCell) for best-effort data.

In contrast to the LAA, the standalone LTE-U can operate without any licensed access technology or assistance. Therefore, it could be a Mobile Network Operator (MNO) independent deployment and operation and it is possible to fall back to an MNO network at coverage loss or national/international roaming situations. The standalone LTE-U is targeted to compete with the WLAN access technology. Since the standalone LTE-U operates completely over unlicensed spectrum resources, it is expected that its Quality of Service (QoS) is not as reliable as the LTE or LAA, but its cost can be much lower than that of the LTE or LAA.

In order to assist a User Equipment (UE) for network selection and traffic distribution over different access networks in context of both a 3GPP access and a non-3GPP access (e.g., WLAN), an Access Network Discovery and Selection Function (ANDSF) technique has been proposed. An ANDSF server can transmit a traffic distribution policy to an ANDSF client at a UE. Based on the traffic distribution policy, the UE can selectively distribute its data traffic over the 3GPP access and the WLAN access. This is also referred to as "traffic steering".

In the future, MNOs will deploy various licensed access networks, such as LTE/ LTE-Advanced and new 5G Radio Access Technologies (RATs), unlicensed access networks such as WLAN, standalone LTE-U, and hybrid access networks with aggregated licensed and unlicensed RATs, such as LWA and LAA. However, while the legacy ANDSF mechanism has been widely applied for traffic steering between e.g., an LTE access and a WLAN access, it does not work well in such highly heterogeneous network environment.

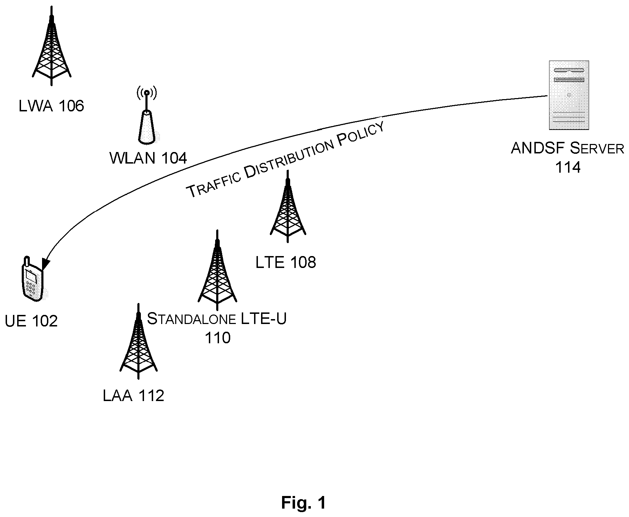

Fig. 1 shows an exemplary network scenario. As shown, a UE 102 is located in a highly heterogeneous network environment where various RATs can be provided for the UE 102, including a legacy WLAN 104, an LWA 106, a legacy LTE 108, a standalone LTE-U 110 and an LAA 112. However, since an ANDSF server 114 may not be aware of the LWA, standalone LTE-U and LAA capabilities, the traffic distribution policy the ANDSF server 114 sends to the UE 102 cannot provide any guidance or advice associated with these RATs even if some or all of them are supported by the UE 102. For example, since the ANDSF server 114 cannot differentiate between the legacy WLAN 104 and the LWA 106, the ANDSF server 114 may not prioritize the LWA 106 over the legacy WLAN 104 in the traffic distribution policy. If the UE 102 selects the legacy WLAN 104 instead of the LWA 106, the user experience may be degraded during a handover to or from the LTE 108 or another WLAN. In addition, the LWA 106 or the LTE 108 may suffer from higher interference from the legacy WLAN 104. As another example, since the ANDSF server 114 may not be aware of the standalone LTE-U 110 and the LAA 112, the ANDSF server 114 cannot direct the UE 102 to offload its traffic from a licensed spectrum to an unlicensed spectrum, which is inefficient in terms of resource utilization.

There is thus a need for an improved solution for traffic steering/distribution.

US2014/233386 A1 seems to describe method and system for offloading of wireless connections from a LTE network to a Wi-Fi network and vice versa.

US2014/071854 A1 seems to describe a network selection for dual mode user equipment (UE) that access both WiFi and 3GPP networks.

WO 2014/067587 A1 seems to describe a method and system for providing a network access management message tailored for the apparatus based at least on one indicator indicating a capability of an apparatus.

### SUMMARY

The invention is defined by the independent claims. Furthermore, the embodiments of the invention are those defined by the claims. Moreover, examples, aspects and embodiments, which are not covered by the claims are presented not as embodiments of the invention, but as background art or examples useful for understanding the invention. It is an object of the present disclosure to provide methods for traffic steering, a network device and a terminal device, capable of allowing a more flexible and/or resource-efficient traffic steering in a heterogeneous network.

In a first aspect, a method in a network device for traffic steering is provided. The method comprises: receiving from a terminal device a radio capability indication indicating one or more radio capabilities of the terminal device and one or more radio capabilities of radio access networks as detected by the terminal device; generating a traffic steering policy based on the radio capability indication; and transmitting the traffic steering policy to the terminal device.

In an embodiment, the method further comprises: receiving from an Operation Support System (OSS) / Business Support System (BSS) a network operator strategy for traffic steering. The traffic steering policy is generated further based on the network operator strategy.

In an embodiment, the method further comprises: receiving from a Home Subscriber Server (HSS) user subscription information associated with the terminal device. The traffic steering policy is generated further based on the user subscription information.

In an embodiment, the method further comprises: receiving from an application server a service provider strategy for traffic steering. The traffic steering policy is generated further based on the service provider strategy.

In an embodiment, the method further comprises: transmitting to the terminal device an inter-system mobility policy indicating priorities associated with the one or more radio capabilities of the terminal device and the one or more radio capabilities of radio access networks indicated in the radio capability indication.

In an embodiment, the one or more radio capabilities of the terminal device and/or the one or more radio capabilities of radio access networks comprise at least one of: standalone Long Term Evolution (LTE) - Unlicensed (LTE-U); Licensed Assisted Access (LAA); and LTE - Wireless Local Area Network (WLAN) Aggregation (LWA).

In an embodiment, the network device is an Access Network Discovery and Selection Function (ANDSF) server.

In a second aspect, a network device for traffic steering is provided. The network device comprises: a receiving unit configured to receive from a terminal device a radio capability indication indicating one or more radio capabilities of the terminal device and one or more radio capabilities of radio access networks as detected by the terminal device; a generating unit configured to generate a traffic steering policy based on the radio capability indication; and a transmitting unit configured to transmit the traffic steering policy to the terminal device.

In a third aspect, a network device is provided for traffic steering. The network device comprises a transceiver, a processor and a memory. The memory contains instructions executable by the processor whereby the network device is operative to: receive from a terminal device a radio capability indication indicating one or more radio capabilities of the terminal device and one or more radio capabilities of radio access networks as detected by the terminal device; generate a traffic steering policy based on the radio capability indication; and transmit the traffic steering policy to the terminal device.

The above embodiments of the first aspect are also applicable for the second and third aspects.

In a fourth aspect, a method in a terminal device for traffic steering is provided. The method comprises: transmitting to a network device a radio capability indication indicating one or more radio capabilities of the terminal device and one or more radio capabilities of radio access networks as detected by the terminal device; receiving a traffic steering policy from the network device; and determining distribution of user traffics over one or more of the radio access networks based on the traffic steering policy.

In an embodiment, the distribution is determined further based on a local setting and/or a user preference at the terminal device.

In an embodiment, the method further comprises: receiving from the network device an inter-system mobility policy indicating priorities associated with the one or more radio capabilities of the terminal device and the one or more radio capabilities of radio access networks indicated in the radio capability indication. The distribution is determined further based on the inter-system mobility policy.

In an embodiment, the one or more radio capabilities of the terminal device and/or the one or more radio capabilities of radio access networks comprise at least one of: standalone Long Term Evolution (LTE) - Unlicensed (LTE-U); Licensed Assisted Access (LAA); and LTE - Wireless Local Area Network (WLAN) Aggregation (LWA).

In a fifth aspect, a terminal device for traffic steering is provided. The terminal device comprises: a transmitting unit configured to transmit to a network device a radio capability indication indicating one or more radio capabilities of the terminal device and one or more radio capabilities of radio access networks as detected by the terminal device; a receiving unit configured to receive a traffic steering policy from the network device; and a determining unit configured to determine distribution of user traffics over one or more of the radio access networks based on the traffic steering policy.

In a sixth aspect, a terminal device is provided for traffic steering. The terminal device comprises a transceiver, a processor and a memory. The memory contains instructions executable by the processor whereby the terminal device is operative to: transmit to a network device a radio capability indication indicating one or more radio capabilities of the terminal device and one or more radio capabilities of radio access networks as detected by the terminal device; receive a traffic steering policy from the network device; and determine distribution of user traffics over one or more of the radio access networks based on the traffic steering policy.

The above embodiments of the fourth aspect are also applicable for the fifth and sixth aspects.

With the embodiments of the present disclosure, a terminal device can transmit to a network device a radio capability indication indicating one or more radio capabilities of the terminal device and one or more radio capabilities of radio access networks as detected by the terminal device. Based on the radio capability indication, the network device can generate a traffic steering policy and transmit it to the terminal device, such that the terminal device can determine distribution of user traffics over one or more of the radio access networks based on the traffic steering policy. In this way, the network device can provide the traffic steering policy based on the radio capabilities of the terminal device and the radio access networks available to the terminal device. It is thus possible to provide a more flexible and/or resource-efficient traffic steering, especially when there are different RATs such as LWA, LAA and standalone LTE-U in the heterogeneous network environment where the terminal device is located.

### BRIEF DESCRIPTION OF THE DRAWINGS

The above and other objects, features and advantages will be more apparent from the following description of embodiments with reference to the figures, in which:
Fig. 1 is a schematic diagram showing an exemplary network
   environment where the present disclosure can be applied;
Fig. 2 is a flowchart illustrating a method for traffic steering according to
   an embodiment of the present disclosure;
Fig. 3 is a flowchart illustrating a method for traffic steering according to
   another embodiment of the present disclosure;
Fig. 4 is a sequence chart explaining the methods shown in Figs. 2 and 3;
Fig. 5 is a block diagram of a network device for traffic steering according to an embodiment of the present disclosure;
Fig. 6 is a block diagram of a network device according to another embodiment of the present disclosure;
Fig. 7 is a block diagram of a terminal device for traffic steering according to an embodiment of the present disclosure; and
Fig. 8 is a block diagram of a terminal device according to another embodiment of the present disclosure.

### DETAILED DESCRIPTION

The embodiments of the disclosure will be detailed below with reference to the drawings. It should be noted that the following embodiments are illustrative only, rather than limiting the scope of the disclosure.

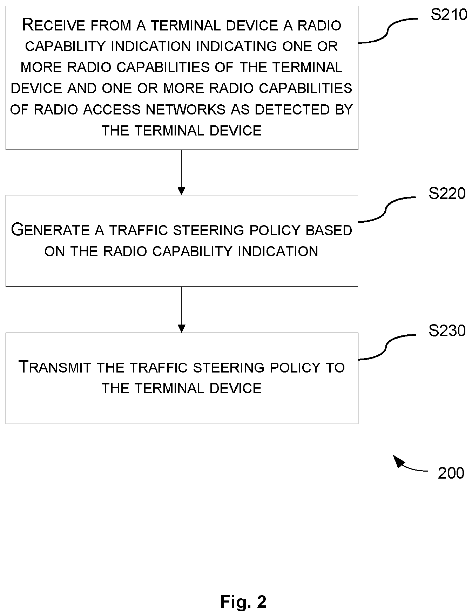

Fig. 2 is a flowchart illustrating a method 200 for traffic steering according to an embodiment of the present disclosure. The method 200 can be performed at a network device, such as the ANDSF server 114 of Fig. 1.

At step S210, a radio capability indication is received from a terminal device (e.g., the UE 102 in Fig. 1). The radio capability indication indicates one or more radio capabilities of the terminal device and one or more radio capabilities of radio access networks as detected by the terminal device.

Here, the one or more radio capabilities of the terminal device and/or the one or more radio capabilities of radio access networks can include at least one of: standalone LTE-U, LAA; and LWA. It can be appreciated by those skilled in the art that the radio capabilities may include other radio capabilities such as the legacy LTE and the legacy WLAN. In the example shown in Fig. 1, the radio capability indication may indicate that the UE 102 supports the legacy LTE, legacy WLAN and LWA and that the UE 102 has detected the LTE 108, the WLAN 104 and the LWA 106 supporting the legacy LTE, legacy WLAN and LWA, respectively.

At step S220, a traffic steering policy is generated based on the radio capability indication.

In an example, the traffic steering policy may indicate to the terminal device a description of traffic to be distributed over each radio access network available to and supported by the terminal device. For example, when the radio capability indication indicates that the UE 102 supports the standalone LTE-U and that the UE 102 has detected the standalone LTE-U 110, the traffic steering policy may indicate to the UE 102 a description of traffic to be distributed over the standalone LTE-U 110, such that the UE 102 can direct its traffic having attributes conforming to the description of traffic to the standalone LTE-U 110. Additionally or alternatively, when the radio capability indication indicates that the UE 102 supports the LAA and that the UE 102 has detected the LAA 112, the traffic steering policy may indicate to the UE 102 a description of traffic to be distributed over the LAA 112, such that the UE 102 can direct its traffic having attributes conforming to the description of traffic to the LAA 112. In this case, the description of traffic may include a description of traffic to be distributed over licensed LTE carriers in the LAA 112, a description of traffic to be distributed over unlicensed LTE carriers in the LAA 112, and a description of traffic to be distributed over both licensed and unlicensed LTE carriers in the LAA 112, such that the UE can direct its traffic to the licensed and/or unlicensed carriers in the LAA 112 accordingly. Additionally or alternatively, when the radio capability indication indicates that the UE 102 supports the LWA and that the UE 102 has detected the LWA 106, the traffic steering policy may indicate to the UE 102 a description of traffic to be distributed over the LWA 106, such that the UE 102 can direct its traffic having attributes conforming to the description of traffic to the LWA 106. In this case, the description of traffic may include a description of traffic to be distributed over the LTE access in the LWA 106, a description of traffic to be distributed over the WLAN access in the LWA 106, and a description of traffic to be distributed over both LTE and WLAN accesses in the LWA 106, such that the UE can direct its traffic to the LTE and/or WLAN accesses in the LWA 106 accordingly.

Optionally, in an example, a network operator strategy for traffic steering can be received from an Operation Support System (OSS) / Business Support System (BSS). In this case, in the step S220, the traffic steering policy can be generated further based on the network operator strategy. For example, the network operator strategy may indicate a user level associated with a user of the terminal device. A user traffic associated with a high user level may be prioritized to be distributed over licensed LTE carriers in the LAA, a user traffic associated with a medium user level may be distributed over unlicensed LTE carriers in the LAA, and a user traffic associated with a low user level may be distributed over the standalone LTE-U. As another example, a user traffic associated with a high user level may be prioritized to be distributed over the LTE access in the LWA, and a user traffic associated with a low user level may be distributed over the WLAN access in the LWA.

Additionally or alternatively, user subscription information associated with the terminal device can be received from a Home Subscriber Server (HSS). In this case, in the step S220, the traffic steering policy can be generated further based on the user subscription information. For example, the user subscription information may indicate whether the user has subscribed with the LAA, LWA and/or standalone LTE-U. If the user has not subscribed with e.g., the LAA, the traffic steering policy will not direct the user traffic from the terminal device to the LAA even if an LAA-enabled radio access network is available to the terminal device and the terminal device itself supports the LAA.

Additionally or alternatively, a service provider strategy for traffic steering can be received from an application server. In this case, in the step S220, the traffic steering policy is generated further based on the service provider strategy. For example, a service provider of a delay-sensitive service, e.g., video gaming, may have its service provider strategy indicating that any user traffic associated with the service is prioritized to be distributed over licensed LTE carriers, such as legacy LTE carriers or licensed LTE carriers in the LAA, but not unlicensed LTE carriers, such as unlicensed LTE carriers in the LAA or standalone LTE-U.

At step S230, the traffic steering policy is transmitted to the terminal device.

In an example, an inter-system mobility policy can also be transmitted to the terminal device. The inter-system mobility policy indicates priorities associated with the one or more radio capabilities of the terminal device and the one or more radio capabilities of radio access networks indicated in the radio capability indication. For example, the inter-system mobility policy may indicate the priority associated with each of the LAA, LWA and standalone LTE-U that are indicated in the radio capability indication. For example, the LAA may have higher priority than the standalone LTE-U, and/or the LTE access in the LWA may have higher priority than the WLAN access in the LWA. The inter-system mobility policy may further indicate a validity condition for each of the LAA, LWA and standalone LTE-U that are indicated in the radio capability indication. For example, the validity condition may include a validity period and/or a validity location for each of the radio accesses.

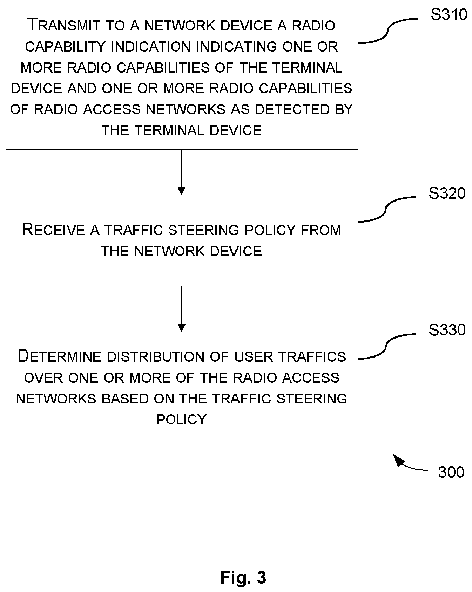

Fig. 3 is a flowchart illustrating a method 300 for traffic steering according to another embodiment of the present disclosure. The method 300 can be performed at a terminal device, such as the UE 102 of Fig. 1.

At step S310, a radio capability indication is transmitted to a network device (e.g., the ANDSF server 114 in Fig. 1). The radio capability indication indicates one or more radio capabilities of the terminal device and one or more radio capabilities of radio access networks as detected by the terminal device. As described above in connection with the method 200, here the one or more radio capabilities of the terminal device and/or the one or more radio capabilities of radio access networks can include at least one of: standalone LTE-U, LAA; and LWA.

At step S320, a traffic steering policy is received from the network device. The traffic steering policy can be generated by the network device in accordance with the above method 200.

At step S330, distribution of user traffics over one or more of the radio access networks is determined based on the traffic steering policy.

As described above in connection with the method 200, the traffic steering policy may indicate to the terminal device a description of traffic to be distributed over each radio access network available to and supported by the terminal device. The terminal device can then direct its traffic having attributes conforming to the description of traffic to the respective radio access network.

In an example, an inter-system mobility policy can be received from the network device. The inter-system mobility policy indicates priorities associated with the one or more radio capabilities of the terminal device and the one or more radio capabilities of radio access networks indicated in the radio capability indication. In this case, in the step S330, the distribution can be determined further based on the inter-system mobility policy. That is, a user traffic can be prioritized to be distributed over a radio access network having a high priority.

In an example, in the step S330, the distribution can be determined further based on a local setting and/or a user preference at the terminal device. For example, the traffic steering policy, and possibly the inter-system mobility policy, can be overridden by the local setting and/or the user preference at the terminal device.

As an example, if the traffic steering policy indicates that a particular type of user traffic is to be distributed over the standalone LTE-U, but the standalone LTE-U has been currently disabled by the local setting (e.g., disabled manually by the user) at the terminal device, the terminal device can distribute the user traffic over another radio access network (e.g., LAA) currently enabled by the local setting. As another example, if the inter-system mobility policy indicates that the LTE access in the LWA has higher priority than the WLAN access in the LWA, but the user preference at the terminal device indicates that the user prefers the WLAN access, the terminal device can distribute the user traffic over the WLAN access in the LWA in accordance with the user preference.

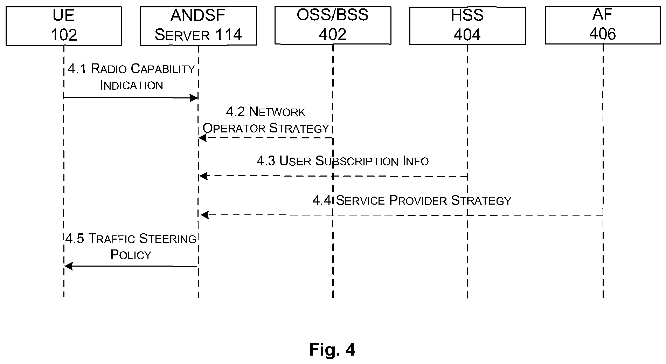

Fig. 4 is a sequence chart explaining the above methods 200 and 300.

At 4.1, the UE 102 sends to the ANDSF server 114 a radio capability indication. The radio capability indication indicates one or more radio capabilities of the UE 102 and one or more radio capabilities (e.g., LAA, LWA and/or standalone LTE-U) of radio access networks as detected by UE 102. Optionally, the ANDSF server 114 requests from an OSS/BSS 402 a network operator strategy for traffic steering and receives the network operator strategy from the OSS/BSS 402 at 4.2. Optionally, the ANDSF server 114 further requests from an HSS 404 user subscription information associated with the UE 102 and receives the user subscription information from the HSS 404 at 4.3. Optionally, the ANDSF server 114 further requests from an application server 406 a service provider strategy for traffic steering and receives the service provider strategy from the application server 406 at 4.4. Then, the ANDSF server 114 generates a traffic steering policy based on the radio capability indication, and possibly further based on one or more of the network operator strategy, the user subscription information and the service provider strategy, and transmits the generated traffic steering policy to the UE 102 at 4.5.

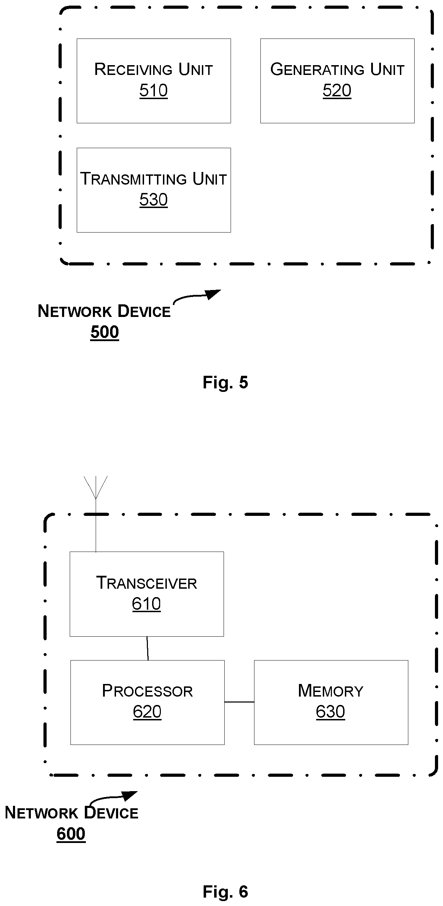

Correspondingly to the method 200 as described above, a network device is provided. Fig. 5 is a block diagram of a network device 500 for traffic steering according to an embodiment of the present disclosure. The network device 500 can be e.g., the ANDSF server 114 in Fig. 1.

As shown in Fig. 5, the network device 500 includes a receiving unit 510 configured to receive from a terminal device a radio capability indication indicating one or more radio capabilities of the terminal device and one or more radio capabilities of radio access networks as detected by the terminal device. The network device 500 further includes a generating unit 520 configured to generate a traffic steering policy based on the radio capability indication. The network device 500 further includes a transmitting unit 530 configured to transmit the traffic steering policy to the terminal device.

In an embodiment, the receiving unit 510 is further configured to receive from an Operation Support System (OSS) / Business Support System (BSS) a network operator strategy for traffic steering. The generating unit 520 is configured to generate the traffic steering policy further based on the network operator strategy.

Alternatively or additionally, the receiving unit 510 is further configured to receive from a Home Subscriber Server (HSS) user subscription information associated with the terminal device. The generating unit 520 is configured to generate the traffic steering policy further based on the user subscription information.

Alternatively or additionally, the receiving unit 510 is further configured to receive from an application server a service provider strategy for traffic steering. The generating unit 520 is configured to generate the traffic steering policy further based on the service provider strategy.

In an embodiment, the transmitting unit 530 is further configured to transmit to the terminal device an inter-system mobility policy indicating priorities associated with the one or more radio capabilities of the terminal device and the one or more radio capabilities of radio access networks indicated in the radio capability indication.

In an embodiment, the one or more radio capabilities of the terminal device and/or the one or more radio capabilities of radio access networks comprise at least one of: LTE-U; LAA; and LWA.

Each of the units 510-530 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 2.

Fig. 6 is a block diagram of a network device 600 according to another embodiment of the present disclosure.

The network device 600 can be provided for traffic steering. The network device 600 includes a transceiver 610, a processor 620 and a memory 630. The memory 630 contains instructions executable by the processor 620 whereby the network device 600 is operative to: receive from a terminal device a radio capability indication indicating one or more radio capabilities of the terminal device and one or more radio capabilities of radio access networks as detected by the terminal device; generate a traffic steering policy based on the radio capability indication; and transmit the traffic steering policy to the terminal device.

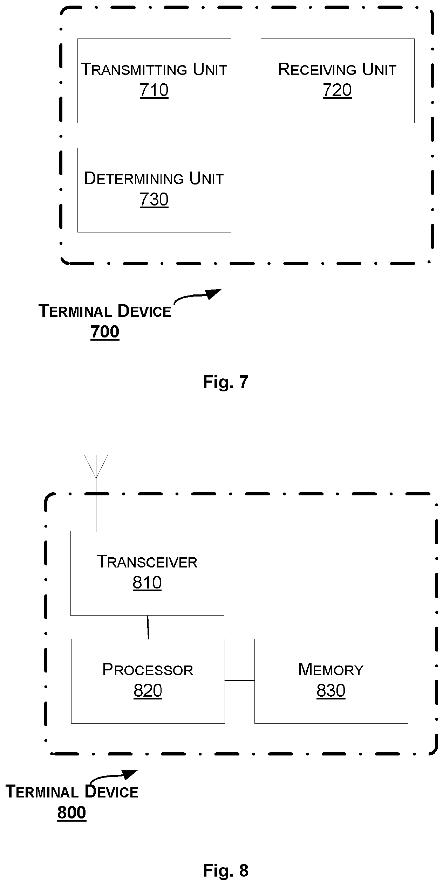

Correspondingly to the method 300 as described above, a terminal device is provided. Fig. 7 is a block diagram of a terminal device 700 for traffic steering according to an embodiment of the present disclosure. The terminal device 700 can be e.g., the UE 102 in Fig. 1.

As shown in Fig. 7, the terminal device 700 includes a transmitting unit 710 configured to transmit to a network device a radio capability indication indicating one or more radio capabilities of the terminal device and one or more radio capabilities of radio access networks as detected by the terminal device. The terminal device 700 further includes a receiving unit 710 configured to receive a traffic steering policy from the network device. The terminal device 700 further includes a determining unit 730 configured to determine distribution of user traffics over one or more of the radio access networks based on the traffic steering policy.

In an embodiment, the determining unit 730 is configured to determine the distribution further based on a local setting and/or a user preference at the terminal device.

In an embodiment, the receiving unit 720 is further configured to receive from the network device an inter-system mobility policy indicating priorities associated with the one or more radio capabilities of the terminal device and the one or more radio capabilities of radio access networks indicated in the radio capability indication. The determining unit 730 is further configured to determine the distribution further based on the inter-system mobility policy.

In an embodiment, the one or more radio capabilities of the terminal device and/or the one or more radio capabilities of radio access networks comprise at least one of: LTE-U; LAA; and LWA.

Each of the units 710-730 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 3.

Fig. 8 is a block diagram of a terminal device 800 according to another embodiment of the present disclosure.

The terminal device 800 can be provided for traffic steering. The terminal device 800 includes a transceiver 810, a processor 820 and a memory 830. The memory 830 contains instructions executable by the processor 820 whereby the terminal device 800 is operative to: transmit to a network device a radio capability indication indicating one or more radio capabilities of the terminal device and one or more radio capabilities of radio access networks as detected by the terminal device; receive a traffic steering policy from the network device; and determine distribution of user traffics over one or more of the radio access networks based on the traffic steering policy.

The present disclosure also provides at least one computer program product in the form of a non-volatile or volatile memory, e.g., an Electrically Erasable Programmable Read-Only Memory (EEPROM), a flash memory and a hard drive. The computer program product includes a computer program. The computer program includes: code/computer readable instructions, which when executed by the processor 620 causes the network device 600 to perform the actions, e.g., of the procedure described earlier in conjunction with Fig. 2; or code/computer readable instructions, which when executed by the processor 820 causes the terminal device 800 to perform the actions, e.g., of the procedure described earlier in conjunction with Fig. 3.

The computer program product may be configured as a computer program code structured in computer program modules. The computer program modules could essentially perform the actions of the flow illustrated in Fig. 2 or 3.

The processor may be a single CPU (Central processing unit), but could also comprise two or more processing units. For example, the processor may include general purpose microprocessors; instruction set processors and/or related chips sets and/or special purpose microprocessors such as Application Specific Integrated Circuit (ASICs). The processor may also comprise board memory for caching purposes. The computer program may be carried by a computer program product connected to the processor. The computer program product may comprise a computer readable medium on which the computer program is stored. For example, the computer program product may be a flash memory, a Random-access memory (RAM), a Read-Only Memory (ROM), or an EEPROM, and the computer program modules described above could in alternative embodiments be distributed on different computer program products in the form of memories.

The disclosure has been described above with reference to embodiments thereof. It should be understood that various modifications, alternations and additions can be made by those skilled in the art without departing from the scope of the disclosure. Therefore, the scope of the disclosure is not limited to the above particular embodiments but only defined by the claims as attached.

## Claims

1. A method (200) performed by a network device for traffic steering, comprising:
- receiving (S210) from a terminal device a radio capability indication indicating one or more radio capabilities of the terminal device and one or more radio capabilities of radio access networks as detected by the terminal device, wherein the one or more radio capabilities of the terminal device and the one or more radio capabilities of radio access networks comprises at least one of: standalone Long Term Evolution (LTE)-Unlicensed (LTE-U), Licensed Assisted Access (LAA), and LTE-Wireless Local Area Network (WLAN) Aggregation (LWA), wherein the network device is an Access Network Discovery and Selection Function, ANDSF, server;
receiving from an Operation Support System, OSS, / Business Support System, BSS, a network operator strategy for traffic steering;
- generating (S220) a traffic steering policy based on: the radio capability indication and the network operator strategy; and
- transmitting (S230) the traffic steering policy to the terminal device.

2. The method (200) of claim 1, further comprising:
- receiving from a Home Subscriber Server, HSS, user subscription information associated with the terminal device,
wherein the traffic steering policy is generated further based on the user subscription information.

3. The method (200) of any of claims 1-2, further comprising:
- receiving from an application server a service provider strategy for traffic steering,
wherein the traffic steering policy is generated further based on the service provider strategy.

4. The method (200) of any of claims 1-3, further comprising:
- transmitting to the terminal device an inter-system mobility policy indicating priorities associated with the one or more radio capabilities of the terminal device and the one or more radio capabilities of radio access networks indicated in the radio capability indication.

5. A network device (500) for traffic steering, comprising:
- a receiving unit (510) configured to:
receive from a terminal device a radio capability indication indicating one or more radio capabilities of the terminal device and one or more radio capabilities of radio access networks as detected by the terminal device, wherein the one or more radio capabilities of the terminal device and the one or more radio capabilities of radio access networks comprises at least one of:
standalone Long Term Evolution (LTE)-Unlicensed (LTE-U), Licensed Assisted Access (LAA), and LTE-Wireless Local Area Network (WLAN) Aggregation (LWA), wherein the network device is an Access Network Discovery and Selection Function, ANDSF, server;
receive from an Operation Support System, OSS, / Business Support System, BSS, a network operator strategy for traffic steering;
- a generating unit (520) configured to generate a traffic steering policy based on: the radio capability indication and the network operator strategy; and
- a transmitting unit (530) configured to transmit the traffic steering policy to the terminal device.

6. The network device (500) of claim 5, wherein
the receiving unit (510) is further configured to receive from a Home Subscriber Server, HSS, user subscription information associated with the terminal device, and
the generating unit (520) is configured to generate the traffic steering policy further based on the user subscription information.

7. The network device (500) of any of claims 5-6, wherein
the receiving unit (510) is further configured to receive from an application server a service provider strategy for traffic steering, and
the generating unit (520) is configured to generate the traffic steering policy further based on the service provider strategy.

8. A method (300) performed by a terminal device for traffic steering, comprising:
- transmitting (S310) to a network device a radio capability indication indicating one or more radio capabilities of the terminal device and one or more radio capabilities of radio access networks as detected by the terminal device, wherein the one or more radio capabilities of the terminal device and the one or more radio capabilities of radio access networks comprises at least one of: standalone Long Term Evolution (LTE)-Unlicensed (LTE-U), Licensed Assisted Access (LAA), and LTE-Wireless Local Area Network (WLAN) Aggregation (LWA);
- receiving (S320) a traffic steering policy from the network device, wherein the traffic steering policy is based on: the radio capability indication and network operator strategy for traffic steering; and
- determining (S330) distribution of user traffics over one or more of the radio access networks based on the traffic steering policy.

9. The method (300) of claim 8, wherein the distribution is determined further based on a local setting and/or a user preference at the terminal device.

10. The method (300) of claim 8 or 9, further comprising:
- receiving from the network device an inter-system mobility policy indicating priorities associated with the one or more radio capabilities of the terminal device and the one or more radio capabilities of radio access networks indicated in the radio capability indication,
wherein the distribution is determined further based on the inter-system mobility policy.

11. A terminal device (700) for traffic steering, comprising:
- a transmitting unit (710) configured to transmit to a network device a radio capability indication indicating one or more radio capabilities of the terminal device and one or more radio capabilities of radio access networks as detected by the terminal device, wherein the one or more radio capabilities of the terminal device and the one or more radio capabilities of radio access networks comprises at least one of:
standalone Long Term Evolution (LTE)-Unlicensed (LTE-U), Licensed Assisted Access (LAA), and LTE-Wireless Local Area Network (WLAN) Aggregation (LWA);
- a receiving unit (720) configured to receive a traffic steering policy from the network device, wherein the traffic steering policy is based on: the radio capability indication and network operator strategy for traffic steering; and
- a determining unit (730) configured to determine distribution of user traffics over one or more of the radio access networks based on the traffic steering policy.

## Patentansprüche

1. Verfahren (200), durchgeführt durch eine Netzwerkvorrichtung zur Verkehrssteuerung, umfassend:
- Empfangen (S210), von einem Endgerät, einer Funkfähigkeitsangabe, die eine oder mehrere Funkfähigkeiten des Endgeräts und eine oder mehrere Funkfähigkeiten von Funkzugangsnetzwerken, erfasst durch das Endgerät, angeben, wobei die eine oder die mehreren Funkfähigkeiten des Endgeräts und die eine oder die mehreren Funkfähigkeiten von Funkzugangsnetzwerken mindestens eines aus Folgendem umfasst:
Standalone Long Term Evolution (LTE)-Unlicensed (LTE-U), Licensed Assisted Access (LAA) und LTE-Wireless Local Area Network (WLAN) Aggregation (LWA), wobei die Netzwerkvorrichtung ein Access Network Discovery and Selection Function (ANDSF) - Server ist;
Empfangen, von einem Operation Support System (OSS) / Business Support System (BSS), einer Netzbetreiberstrategie zur Verkehrssteuerung;
- Erzeugen (S220) einer Verkehrssteuerungsrichtlinie basierend auf: der Funkfähigkeitsangabe und der Netzbetreiberstrategie; und
- Übertragen (S230) der Verkehrssteuerungsrichtlinie an das Endgerät.

2. Verfahren (200) nach Anspruch 1, ferner umfassend:
- Empfangen, von einem Home Subscriber Server (HSS), von Benutzerteilnehmerinformationen im Zusammenhang mit dem Endgerät,
wobei die Verkehrssteuerungsrichtlinie ferner basierend auf den Benutzerteilnehmerinformationen erzeugt wird.

3. Verfahren (200) nach einem der Ansprüche 1-2, ferner umfassend:
- Empfangen, von einem Anwendungsserver, einer Dienstanbieterstrategie zur Verkehrssteuerung,
wobei die Verkehrssteuerungsstrategie ferner basierend auf der Dienstanbieterstrategie erzeugt wird.

4. Verfahren (200) nach einem der Ansprüche 1-3, ferner umfassend:
- Übertragen, an das Endgerät, einer Zwischensystemmobilitätsrichtlinie, die Prioritäten im Zusammenhang mit der einen oder den mehreren Funkfähigkeiten des Endgeräts und mit der einen oder den mehreren Funkfähigkeiten von Funkzugangsnetzwerken angibt, die in der Funkfähigkeitsangabe angegeben werden.

5. Netzwerkvorrichtung (500) zur Verkehrssteuerung, umfassend:
- eine Empfangseinheit (510), die für Folgendes konfiguriert ist:
Empfangen, von einem Endgerät, einer Funkfähigkeitsangabe, die eine oder mehrere Funkfähigkeiten des Endgeräts und eine oder mehrere Funkfähigkeiten von Funkzugangsnetzwerken, erfasst durch das Endgerät, angeben, wobei die eine oder die mehreren Funkfähigkeiten des Endgeräts und die eine oder die mehreren Funkfähigkeiten von Funkzugangsnetzwerken mindestens eines aus Folgendem umfasst: Standalone Long Term Evolution (LTE)-Unlicensed (LTE-U), Licensed Assisted Access (LAA) und LTE-Wireless Local Area Network (WLAN) Aggregation (LWA), wobei die Netzwerkvorrichtung ein Access Network Discovery and Selection Function (ANDSF) -Server ist;
Empfangen, von einem Operation Support System (OSS) / Business Support System (BSS), einer Netzbetreiberstrategie zur Verkehrssteuerung;
- eine Erzeugungseinheit (520), die konfiguriert ist, um eine Verkehrssteuerungsrichtlinie basierend auf Folgendem zu erzeugen: der Funkfähigkeitsangabe und der Netzbetreiberstrategie; und
- eine Übertragungseinheit (530), die konfiguriert ist, um die Verkehrssteuerungsrichtlinie an das Endgerät zu übertragen.

6. Netzwerkvorrichtung (500) nach Anspruch 5, wobei die Empfangseinheit (510) ferner konfiguriert ist, um, von einem Home Subscriber Server (HSS), Benutzerteilnehmerinformationen im Zusammenhang mit dem Endgerät zu empfangen, und
die Erzeugungseinheit (520) konfiguriert ist, um die Verkehrssteuerungsrichtlinie ferner basierend auf den Benutzerteilnehmerinformationen zu erzeugen.

7. Netzwerkvorrichtung (500) nach einem der Ansprüche 5-6, wobei
die Empfangseinheit (510) ferner konfiguriert ist, um, von einem Anwendungsserver, eine Dienstanbieterstrategie zur Verkehrssteuerung zu empfangen, und
die Erzeugungseinheit (520) konfiguriert ist, um die Verkehrssteuerungsstrategie ferner basierend auf der Dienstanbieterstrategie zu erzeugen.

8. Verfahren (300) durchgeführt durch ein Endgerät zur Verkehrssteuerung, umfassend:
- Übertragen (S310), an eine Netzwerkvorrichtung, einer Funkfähigkeitsangabe, die eine oder mehrere Funkfähigkeiten des Endgeräts und eine oder mehrere Funkfähigkeiten von Funkzugangsnetzwerken, erfasst durch das Endgerät, angeben, wobei die eine oder die mehreren Funkfähigkeiten des Endgeräts und die eine oder die mehreren Funkfähigkeiten von Funkzugangsnetzwerken mindestens eines aus Folgendem umfasst:
Standalone Long Term Evolution (LTE)-Unlicensed (LTE-U), Licensed Assisted Access (LAA) und LTE-Wireless Local Area Network (WLAN) Aggregation (LWA);
- Empfangen (S320) einer Verkehrssteuerungsrichtlinie von der Netzwerkvorrichtung, wobei die Verkehrssteuerungsrichtlinie auf Folgendem basiert: der Funkfähigkeitsangabe und der Netzbetreiberstrategie zur Verkehrssteuerung; und
- Bestimmen (S330) der Verteilung von Benutzerdatenverkehr über eines oder mehrere der Funkzugangsnetzwerke basierend auf der Verkehrssteuerungsrichtlinie.

9. Verfahren (300) nach Anspruch 8, wobei die Verteilung ferner basierend auf einer lokalen Einstellung und/oder einer Benutzerpräferenz an dem Endgerät bestimmt wird.

10. Verfahren (300) nach Anspruch 8 oder 9, ferner umfassend:
- Empfangen, von der Netzwerkvorrichtung, einer Zwischensystemmobilitätsrichtlinie, die Prioritäten im Zusammenhang mit der einen oder den mehreren Funkfähigkeiten des Endgeräts und mit der einen oder den mehreren Funkfähigkeiten von Funkzugangsnetzwerken angibt, die in der Funkfähigkeitsangabe angegeben werden,
wobei die Verteilung ferner basierend auf der Zwischensystemmobilitätsrichtlinie bestimmt wird.

11. Endgerät (700) zur Verkehrssteuerung, umfassend:
- eine Übertragungseinheit (710), die konfiguriert ist, um, an eine Netzwerkvorrichtung, eine Funkfähigkeitsangabe zu übertragen, die eine oder mehrere Funkfähigkeiten des Endgeräts und eine oder mehrere Funkfähigkeiten von Funkzugangsnetzwerken, erfasst durch das Endgerät, angeben, wobei die eine oder die mehreren Funkfähigkeiten des Endgeräts und die eine oder die mehreren Funkfähigkeiten von Funkzugangsnetzwerken mindestens eines aus Folgendem umfasst: Standalone Long Term Evolution (LTE)-Unlicensed (LTE-U), Licensed Assisted Access (LAA) und LTE-Wireless Local Area Network (WLAN) Aggregation (LWA);
- eine Empfangseinheit (720), die konfiguriert ist, um eine Verkehrssteuerungsrichtlinie von der Netzwerkvorrichtung zu empfangen, wobei die Verkehrssteuerungsrichtlinie auf Folgendem basiert: der Funkfähigkeitsangabe und der Netzbetreiberstrategie zur Verkehrssteuerung; und
- eine Bestimmungseinheit (730), die konfiguriert ist, um die Verteilung von Benutzerdatenverkehr über eines oder mehrere der Funkzugangsnetzwerke basierend auf der Verkehrssteuerungsrichtlinie zu bestimmen.

## Revendications

1. Procédé (200) réalisé par un dispositif de réseau pour orientation de trafic, comprenant :
- la réception (S210), à partir d'un dispositif de terminal, d'une indication de capacité radio indiquant une ou plusieurs capacités radio du dispositif de terminal et une ou plusieurs capacités radio de réseaux d'accès radio tels que détectés par le dispositif de terminal, dans lequel les unes ou plusieurs capacités radio du dispositif de terminal et les unes ou plusieurs capacités radio de réseaux d'accès radio comprend au moins un de : évolution à long terme (LTE)-sans licence (LTE-U) autonome, accès assisté avec licence (LAA), et agrégation LTE-réseau local sans fil (WLAN) (LWA), dans lequel le dispositif de réseau est un serveur de fonction de découverte et de sélection de réseau d'accès, ANDSF ;
la réception, à partir d'un système de support d'opération, OSS,/système de support commercial, BSS, d'une stratégie d'opérateur de réseau pour orientation de trafic ;
- la génération (S220) d'une politique d'orientation de trafic sur la base de : l'indication de capacité radio et la stratégie d'opérateur de réseau ; et
- la transmission (S230) de la politique d'orientation de trafic au dispositif de terminal.

2. Procédé (200) selon la revendication 1, comprenant en outre :
- la réception, à partir d'un serveur d'abonné domestique, HSS, des informations d'abonnement d'utilisateur associées au dispositif de terminal,
dans lequel la politique d'orientation de trafic est générée en outre sur la base des informations d'abonnement d'utilisateur.

3. Procédé (200) selon l'une quelconque des revendications 1 et 2, comprenant en outre :
- la réception, à partir d'un serveur d'application, d'une stratégie de fournisseur de service pour orientation de trafic, dans lequel la politique d'orientation de trafic est générée en outre sur la base de la stratégie de fournisseur de service.

4. Procédé (200) selon l'une quelconque des revendications 1 à 3, comprenant en outre :
- la transmission, au dispositif de terminal, d'une politique de mobilité inter-système indiquant des priorités associées aux unes ou plusieurs capacités radio du dispositif de terminal et aux unes ou plusieurs capacités radio de réseaux d'accès radio indiquées dans l'indication de capacité radio.

5. Dispositif de réseau (500) pour orientation de trafic, comprenant :
- une unité de réception (510) configurée pour :
recevoir, à partir d'un dispositif de terminal, une indication de capacité radio indiquant une ou plusieurs capacités radio du dispositif de terminal et une ou plusieurs capacités radio de réseaux d'accès radio tels que détectés par le dispositif de terminal, dans lequel les unes ou plusieurs capacités radio du dispositif de terminal et les unes ou plusieurs capacités radio de réseaux d'accès radio comprend au moins un de : évolution à long terme (LTE)-sans licence (LTE-U) autonome, accès assisté avec licence (LAA), et agrégation LTE-réseau local sans fil (WLAN) (LWA), dans lequel le dispositif de réseau est un serveur de fonction de découverte et de sélection de réseau d'accès, ANDSF ;
recevoir, à partir d'un système de support d'opération, OSS,/système de support commercial, BSS, une stratégie d'opérateur de réseau pour orientation de trafic ;
- une unité de génération (520) configurée pour générer une politique d'orientation de trafic sur la base de : l'indication de capacité radio et la stratégie d'opérateur de réseau ; et
- une unité de transmission (530) configurée pour transmettre la politique d'orientation de trafic au dispositif de terminal.

6. Dispositif de réseau (500) selon la revendication 5, dans lequel
l'unité de réception (510) est en outre configurée pour recevoir, à partir d'un serveur d'abonné domestique, HSS, des informations d'abonnement d'utilisateur associées au dispositif de terminal, et
l'unité de génération (520) est configurée pour générer la politique d'orientation de trafic en outre sur la base de l'informations d'abonnement d'utilisateur.

7. Dispositif de réseau (500) selon l'une quelconque des revendications 5 et 6, dans lequel
l'unité de réception (510) est en outre configurée pour recevoir, à partir d'un serveur d'application, une stratégie de fournisseur de service pour orientation de trafic, et
l'unité de génération (520) est configurée pour générer la politique d'orientation de trafic en outre sur la base de la stratégie de fournisseur de service.

8. Procédé (300) réalisé par un dispositif de terminal pour orientation de trafic, comprenant :
- la transmission (S310), à un dispositif de réseau, d'une indication de capacité radio indiquant une ou plusieurs capacités radio du dispositif de terminal et une ou plusieurs capacités radio de réseaux d'accès radio tels que détectés par le dispositif de terminal, dans lequel les unes ou plusieurs capacités radio du dispositif de terminal et les unes ou plusieurs capacités radio de réseaux d'accès radio comprend au moins un de : évolution à long terme (LTE)-sans licence (LTE-U) autonome, accès assisté avec licence (LAA), et agrégation LTE-réseau local sans fil (WLAN) (LWA) ;
- la réception (S320) d'une politique d'orientation de trafic à partir du dispositif de réseau, dans lequel la politique d'orientation de trafic est sur la base de : l'indication de capacité radio et la stratégie d'opérateur de réseau pour orientation de trafic ; et
- la détermination (S330) de distribution de trafics d'utilisateur par l'intermédiaire d'un ou de plusieurs des réseaux d'accès radio sur la base de la politique d'orientation de trafic.

9. Procédé (300) selon la revendication 8, dans lequel la distribution est déterminée en outre sur la base d'un réglage local et/ou d'une préférence d'utilisateur dans le dispositif de terminal.

10. Procédé (300) selon la revendication 8 ou 9, comprenant en outre :
- la réception, à partir du dispositif de réseau, d'une politique de mobilité inter-système indiquant des priorités associées aux unes ou plusieurs capacités radio du dispositif de terminal et aux unes ou plusieurs capacités radio de réseaux d'accès radio indiquées dans l'indication de capacité radio,
dans lequel la distribution est déterminée en outre sur la base de la politique de mobilité inter-système.

11. Dispositif de terminal (700) pour orientation de trafic, comprenant :
- une unité de transmission (710) configurée pour transmettre, à un dispositif de réseau, une indication de capacité radio indiquant une ou plusieurs capacités radio du dispositif de terminal et une ou plusieurs capacités radio de réseaux d'accès radio tels que détectés par le dispositif de terminal, dans lequel les unes ou plusieurs capacités radio du dispositif de terminal et les unes ou plusieurs capacités radio de réseaux d'accès radio comprend au moins un de : évolution à long terme (LTE)-sans licence (LTE-U) autonome, accès assisté avec licence (LAA), et agrégation LTE-réseau local sans fil (WLAN) (LWA) ;
- une unité de réception (720) configurée pour recevoir une politique d'orientation de trafic à partir du dispositif de réseau, dans lequel la politique d'orientation de trafic est sur la base de : l'indication de capacité radio et la stratégie d'opérateur de réseau pour orientation de trafic ; et
- une unité de détermination (730) configurée pour déterminer une distribution de trafics d'utilisateur par l'intermédiaire d'un ou de plusieurs des réseaux d'accès radio sur la base de la politique d'orientation de trafic.
